# EUROPÄISCHE PATENTSCHRIFT

(11) **EP 1 783 439 B1**
(45) Veröffentlichungstag und Bekanntmachung des Hinweises auf die Patenterteilung: **23.11.2016**
(21) Anmeldenummer: 06016216.1
(22) Anmeldetag: 03.08.2006
(51) Int. Cl.: F24H 3/04, F24H 9/18, B60H 1/22

(54) **Elektrisches Heizmodul zur Luftstromerwärmung, insbesondere in Fahrzeugen**
Electric heating modul for heating an air stream, in particular in vehicles.
Module chauffant électrique pour chauffer un flux d'air, notamment pour véhicules.

(30) Priorität: 06.08.2005 DE 202005012394 U
(43) Veröffentlichungstag der Anmeldung: 09.05.2007
(73) Patentinhaber: MicroHellix GmbH, 53505 Berg (DE)
(72) Erfinder: Schehr, Ingo, 76746 Jockgrim (DE)
(74) Vertreter: Lemcke, Brommer & Partner Patentanwälte Partnerschaft mbB

(56) Entgegenhaltungen:
- EP-A1- 0 194 507
- EP-A1- 1 432 287
- EP-A2- 0 898 139
- DE-A1- 2 308 336
- DE-A1- 10 142 512
- DE-T2- 69 008 677
- GB-A- 2 189 119
- US-A- 1 928 270
- US-A- 3 223 828
- US-A1- 2003 095 795

## Beschreibung

Die Erfindung betrifft ein elektrisches Heizmodul zur Luftstromerwärmung nach dem Oberbegriff des Anspruchs 1. Dieses Heizmodul ist insbesondere zur Luftstromerwärmung in Fahrzeugen, wie Kraftfahrzeugen oder Flugzeugen vorgesehen. Es besteht im Wesentlichen aus mindestens einem PTC-Heizelement und mindestens einem daran angrenzenden, luftdurchströmbaren Wärmeabgabebereich mit wärmeleitenden Lamellen, die mit dem PTC-Heizelement in Wirkverbindung stehen. Das PTC-Heizelement ist mit den wärmeleitenden Lamellen mittels eines Rahmens zu einem Modul zusammengefasst.

PTC-Elemente sind Halbleiter-Widerstände aus Keramik, deren ohmscher Widerstand temperaturabhängig ist. Die Widerstands-Temperatur-Kennlinie verhält sich nichtlinear: Der Widerstand eines PTC-Heizelements sinkt mit steigender Bauteiltemperatur zunächst leicht, um dann bei einer charakteristischen Temperatur (Referenztemperatur) sehr steil anzusteigen. Dieser insgesamt positive Verlauf der Widerstands-Temperatur-Kennlinie (PTC = Positive Temperature Coefficient) führt dazu, dass ein PTC-Heizelement selbstregelnde Eigenschaften aufweist. Bei einer Bauteiltemperatur, die deutlich niedriger als die Referenztemperatur liegt, weist das PTC-Heizelement einen niedrigen Widerstand auf, so dass entsprechend hohe Stromstärken durchgeleitet werden können. Wenn für eine gute Wärmeabfuhr von der Oberfläche des PTC-Heizelements gesorgt ist, wird also entsprechend viel elektrische Leistung aufgenommen und als Wärme abgegeben. Steigt die Temperatur des PTC-Heizelements jedoch über die Referenztemperatur, steigt der PTC-Widerstand rasch an, so dass die elektrische Leistungsaufnahme auf einen sehr geringen Wert begrenzt wird. Die Bauteiltemperatur nähert sich dann einem oberen Grenzwert, der abhängig ist von der Wärmeaufnahme der Umgebung des PTC-Heizelements. Unter normalen Umweltbedingungen kann die Bauteiltemperatur des PTC-Heizelements also nicht über eine charakteristische höchste Temperatur ansteigen, selbst wenn die gewollte Wärmeableitung im Störfall völlig unterbrochen wird. Dies und die selbstregelnden Eigenschaften eines PTC-Heizelements, aufgrund deren die aufgenommene elektrische Leistung genau der abgegebenen thermischen Leistung entspricht, prädestiniert PTC-Heizelemente für den Einsatz in Heizungs- bzw. Klimaanlagen von Fahrzeugen oder bei sonstigen Anwendungen von Luftstromerwärmungen in Fahrzeugen. Denn aus Sicherheitsgründen dürfen in diesem Anwendungsgebiet auch im Störfall keine feuergefährlichen Temperaturen im Heizelement entstehen, wobei gleichwohl im Normalbetrieb eine hohe Heizleistung gefordert wird.

Zur Innenraumheizung von Kraftfahrzeugen ist es bereits bekannt, elektrische Heizmodule mit einem Rahmen, der eine Mehrzahl von PTC-Heizelementen und daran angrenzenden, luftdurchströmbaren Wärmeabgabebereichen mit wärmeleitenden Lamellen zu einem Modul zusammenfasst, einzusetzen. Ein Beispiel für derartige bekannte elektrische Heizmodule findet sich in der EP 0 350 528 A1.

In der EP 1 479 918 A1 ist ein komplettes Gebläsemodul, bestehend aus einem in einem Gehäuse integrierten Radiallüfter und einem Heizmodul der eingangs genannten Art, offenbart, das zur Sitzheizung in einem belüfteten Kraftfahrzeugsitz dienen soll. Da ein Kraftfahrzeugsitz aus Sicherheitsgründen auch bei Ausfall des Lüfters an dessen Oberfläche eine Maximaltemperatur, die für Menschen verträglich ist, nicht überschreiten darf, sind Heizmodule mit PTC-Heizelementen hervorragend geeignet, zumal sie bei gleicher Sicherheit eine wesentlich höhere Heizleistung abgeben können, als die herkömmlich in Sitzheizungen verwendeten Matten mit elektrischen Widerstandsdrähten, deren Leistungsaufnahme aus Sicherheitsgründen sehr begrenzt sein muss.

Die bisher bekannten elektrischen Heizmodule der eingangs genannten Art bestehen in der Regel aus mehreren Lagen von flächig nebeneinander angeordneten, mit ihrer Schmalseite im Luftstrom stehenden PTC-Heizelementen, die an ihren flachen Oberseiten und ihren Unterseiten jeweils mit Kontaktblechen elektrisch kontaktiert sind. Die daran angrenzenden Wärmeabgabebereiche weisen mäanderförmig angeordnete Metalllamellen auf, die ebenfalls mit ihrer Schmalseite im Luftstrom stehen und an ihrer Breitseite die Kontaktierungsbleche der PTC-Heizelemente in regelmäßigen Abständen für einen Wärmeübergang aufliegend thermisch kontaktieren. Um eine gute Wärmeableitung von den PTC-Heizelementen an die wärmeleitenden Lamellen zu erzielen, können Wärmeleitkleber oder sonstige Verbindungstechniken verwendet werden; es hat sich jedoch als effizienteste Lösung durchgesetzt, die PTC-Heizelemente und die wärmeleitenden Lamellen in einen diese zu einem Modul zusammenfassenden Rahmen zu setzen und innerhalb des Rahmens mindestens ein Federelement vorzusehen, der die abwechselnd angeordneten Wärmeabgabebereiche mit wärmeleitenden Lamellen und die Stege mit den PTC-Heizelementen aufeinander presst. Eine solche Anordnung bei einer Heizvorrichtung mit zeilenförmigen Heizlamellen ist auch in der DE 101 42 512 A1 gezeigt.

Dies bedingt allerdings eine rechteckige Form des elektrischen Heizmoduls mit zeilenartiger Strukturierung der Bauteile, die strömungstechnisch zur Luftstromerwärmung insbesondere dann nicht optimal ist, wenn der Platz für entsprechende luftstromführende Kanäle wie in einem Kraftfahrzeug nur sehr begrenzt ist. Insofern war es für das Gebläsemodul für Kraftfahrzeugsitze nach der EP 1 479 918 A1 folgerichtig, einen Radiallüfter einzusetzen. Radiallüfter sind bekanntermaßen jedoch eher weniger für diesen Zweck geeignet, da sie einen hohen Druck bei entsprechend hohen Ausströmgeschwindigkeiten erzeugen.

Darüber hinaus ist die Fertigung der bekannten elektrischen Heizmodule aufgrund ihres mehrschichtigen, federbelasteten Aufbaus innerhalb eines Rahmens kaum maschinell möglich. Es ist vielmehr relativ viel Handarbeit notwendig.

In der US 2003/0095795 A1 ist ein elektrisches Heizmodul offenbart, in dem eine Mehrzahl von PTC-Elementen flach zwischen zwei wärmeleitenden Scheiben angeordnet sind und von diesen kontaktiert werden. Die wärmeleitenden Scheiben enthalten zwischen den PTC-Elementen mehrere Segmente mit luftdurchströmbaren Öffnungen, so dass hierdurch Wärmeabgabebereiche gebildet werden.

Diese Dokument zeigt den Oberbegriff von Anspruch 1.

Ausgehend von diesem Stand der Technik liegt der vorliegenden Erfindung die Aufgabe zugrunde, ein elektrisches Heizmodul der eingangs genannten Art hinsichtlich dessen effizienter Einsetzbarkeit auch bei beengten Platzverhältnissen, wie in Kraftfahrzeugen, sowie hinsichtlich einer maschinellen Fertigbarkeit zu verbessern.

Gelöst ist diese Aufgabe durch ein elektrisches Heizmodul mit den Merkmalen des Anspruchs 1. Bevorzugte Ausgestaltungen und Weiterbildungen der Erfindung sind in den Ansprüchen 2 bis 26 niedergelegt

Gemäß der vorliegenden Erfindung wird ein elektrisches Heizmodul der eingangs genannten Art also dadurch modifiziert, dass der Wärmeabgabebereioh ringförmig ausgebildet ist. Besonders bevorzugt ist hierbei selbstverständlich eine kreisrunde Form: hierauf ist die Erfindung jedoch nicht beschränkt. Vielmehr ist auch eine abgeflachte, elliptische oder stadionförmige Ringform sowie die Form eines n-Ecks von der Erfindung umfasst. Eine solche ringförmige Anordnung des Wärmeabgabebereichs mit seinen wärmeleitenden Lamellen, die vorzugsweise im wesentlichen radial verlaufend angeordnet sind, ermöglicht, dass das erfindungsgemäße elektrische Heizmodul, so wie es ist, in einen strömungsgünstigen zylindrischen Luftströmungskanal oder ein entsprechendes Rohr eingesetzt werden kann, wobei eine sehr gleichmäßige Durchströmung des Wärmeabgabebereichs ohne Bildung von heißen Bereichen, wie zum Beispiel in den Ecken eines herkömmlichen rechteckigen, zeilenartig angeordneten Heizmoduls, gewährleistet ist. Vor allem jedoch ist ein Heizmodul nach der Erfindung, also mit einem ringförmig ausgebildeten Wärmeabgabebereich, zur effizienten Kombination mit einem Axial- oder Diagonallüfter geeignet; dieser kann dann ganz einfach vor oder hinter das erfindungsgemäße Heizmodul gesetzt werden, um einen überhitzungssicheren Heizlüfter zu bilden.

Bei einer radial verlaufenden Anordnung der wärmeleitenden Lamellen ergibt sich der große Vorteil gegenüber dem bisherigen Stand der Technik, dass die Lamellen nicht nur in axialer Richtung vom Luftstrom durchströmt werden, sondern dass der Luftstrom - insbesondere bei entsprechender Formung des Strömungskanals - zusätzlich eine radiale Geschwindigkeitskomponente entlang der Lamellen erhält, so dass diese nicht nur eindimensional, sondern zweidimensional durchströmt werden. Dies erhöht die Effizienz der Wärmeauskopplung in den Luftstrom.

Erfindungsgemäß werden die flachen PTC-Heizelemente, deren Breitseiten jeweils eine obere und eine untere Kontaktierungsfläche bilden, Im wesentlichen senkrecht zur Luftströmung angeordnet, also so, dass die Kontaktierungsflächen im wesentlichen in radialen Ebenen liegen. Die wärmeleitenden Lamellen dagegen müssen selbstverständlich mit ihren Breitseiten parallel zum Luftstrom verlaufen, so dass sie leicht von diesem durchströmbar sind. Die wärmeleitenden Lamellen treffen dann also im Wesentlichen rechtwinklig auf die Kontaktierungsflächen der PTC-Heizelemente auf, oder gegebenenfalls indirekt auf elektrische stromführende Kontaktelemente, die auf den Kontaktierungsflächen der PTC-Heizelemente aufliegen. Dies hat den großen Vorteil, dass die wärmeleitenden Lamellen einem Anpressdruck auf die PTC-Heizelemente bzw, auf die Kontaktelemente sehr viel besser standhalten, da sie in Richtung ihrer Schmalseiten die höchste Stabilität aufweisen. Eine maschinelle bzw. vollautomatische Fertigung des erfindungsgemäßen elektrischen Heizmoduls wird dadurch sehr viel leichter möglich. Gleichzeitig stört die unübliche Anordnung der PTC-Heizelemente deshalb nicht, weil der Wärmeabgabebereich erfindungsgemäß ringförmig ausgebildet ist. Die PTC-Heizelemente können also im Zentrum des Rings angeordnet sein, in dem auch der Motor eines Axiallüfters sitzt, oder alternativ oder zusätzlich kann eine Mehrzahl von PTC-Heizelementen ringförmig außen um den Wärmeabgabebereich angeordnet sein, und zwar vorzugsweise außerhalb des Luftströmungskanals. Die unübliche Anordnung der PTC-Heizelemente schmälert insofern die Durchtrittsfläche für den zu erwärmenden Luftstrom nicht.

Wenn der Rahmen außerdem in einer im Wesentlichen radial verlaufenden Trennebene teilbar ist, wird dieser im Rahmen einer maschinellen Fertigung in einer Richtung zusammengesetzt, die parallel zum Luftstrom verläuft, und nicht wie bisher senkrecht hierzu. Dementsprechend können die ringförmigen Lamellen und die PTC-Heizelemente in eine Hälfte des Rahmens eingesetzt werden, und der Rahmen dann durch Aufsetzen der anderen Hälfte geschlossen werden, ohne den Wärmeabgabebereich mit möglicherweise unzulässig hohen Kräften zu beaufschlagen. Lediglich derjenige Bereich der wärmeleitenden Lamellen, der die Wärmeübergangsabschnitte bildet und direkt oder indirekt auf den PTC-Heizelementen zu liegen kommt, wird vorzugsweise mit einem Federelement axial gepresst. Da jedoch die Lamellen, wie erwähnt, in axialer Richtung eine sehr viel höhere Stabilität besitzen, als in radialer Richtung, kann nicht nur der Anpressdruck für einen besseren Wärmeübergang erhöht werden, sondern insbesondere ist dann eine vollautomatische Fertigung des erfindungsgemäßen Heizmoduls möglich.

An der Trennebene des Rahmens ist erfindungsgemäß ein Federelement zum axialen Anpressen der wärmeleitenden Lamellen an das PTC-Heizelement und/oder die darauf befindlichen Kontaktelemente in den Rahmen eingesetzt. Dieses Federelement kann aus weichelastischem Material, insbesondere einem Elastomer, und im fertigungstechnisch einfachsten Fall aus einer handelsüblichen O-Ring-Dichtung bestehen, gegebenenfalls zur Verringerung des Anpressdrucks mit umfangsverteilt eingebrachten Ausnehmungen. Ein solches Federelement aus weichelastischem Material hat nicht nur den Vorteil einer sehr kostengünstigen Fertigung; es ist darüber hinaus auch wärmeisolierend, so dass an dieser Stelle kein Wärmeverlust entsteht und die von den PTC-Heizelementen abgegebene thermische Energie effizient auf den Luftstrom übertragen wird.

Alternativ zum eben beschriebenen separat in den Rahmen eingelegten Federelement aus weichelastischem Material kann der Rahmen selbst zumindest teilweise aus weichelastischem Material bestehen und an der Trennebene einen im wesentlichen ringförmigen Federabschnitt zum axialen Anpressen der wärmeleitenden Lamellen an das PTC-Heizelement und/oder die Kontaktelemente aufweisen, zum Beispiel in Form einer nach innen eingezogenen Lippe. Dies vereinfacht die Fertigungstechnik des erfindungsgemäßen Heizmoduls nochmals.

Die wärmeleitenden Lamellen werden bevorzugt aus U-Profilen gebildet, deren U-Rücken die Wärmeübergangsabschnitte bilden, welche auf den oberen und/oder unteren Kontaktierungsflächen der PTC-Heizelemente und/oder indirekt auf deren Kontaktelementen aufliegen und für die Wärmeauskopplung von den PTC-Heizelementen auf die Lamellen sorgen. Die U-Schenkel der wärmeleitenden Lamellen können hierbei mit Oberflächenstrukturierungen, insbesondere sickenartigen Strukturen zur Lenkung und auch insbesondere zur Verwirbelung des Luftstroms versehen sein. Die Erzeugung von Wirbeln im Luftstrom an solchen Oberflächenstrukturierungen verbessert die konvektive Wärmeleitung im Luftstrom und somit die Wärmeauskopplung von den Lamellen in den Luftstrom signifikant.

Alternativ zur Ausbildung der wärmeleitenden Lamellen als U-Profile können dieselben auch aus einem Metallblech gebildet sein, das mäanderförmig gebogen wird, wobei zur Herstellung der Ringform die zum Zentrum des Wärmeabgabebereichs hin weisenden Biegungen jeweils einen kleineren Biegeradius aufweisen, als die nach außen weisenden Biegungen. Vorzugsweise sind die zum Zentrum des Wärmeabgabebereichs hin weisenden Biegungen jeweils zu einem Knick zusammengepresst. Das Verschweißen der U-Profile untereinander zur Bildung des Lamellenringes entfällt hierdurch, was eine vorteilhafte Vereinfachung bei der Fertigung sein kann.

Wenn die wärmeleitenden Lamellen aus einem mäanderförmig gebogenen Metallblech hergestellt werden, können mehrere Stücke aneinandergesetzt den Lamellenring bilden, oder aber ein einziges gebogenes Metallblech bildet den Lamellenring. Für einen besseren Wärmeübergang zu den PTC-Heizelementen kann auch hier wiederum ein ringförmiger Wärmeübergangsabschnitt vorgesehen sein, der vorzugsweise als Wärmeübergangs-Ringblech auf die wärmeleitenden Lamellen aufgebracht wird. Dieses Wärmeübergangs-Ringblech kann auch aus mehreren Segmenten bestehen und muss nicht durchgehend sein; gegebenenfalls kann sie auch ganz weggelassen werden, so dass die mäanderförmig gebogenen Lamellen einfach mit ihrer Schmalseite auf den Kontaktringen der PTC-Heizelemente aufliegen.

Wie oben erwähnt, bietet die erfindungsgemäße ringförmige Ausbildung des Wärmeabgabebereichs die äußerst vorteilhafte Möglichkeit, einen Axial- oder Diagonallüfter mit dem elektrischen Heizmodul zu einem Heizlüfter zu kombinieren. Hierfür ist es vorteilhaft, wenn am Rahmen des elektrischen Heizmoduls ein Lüftergehäuse angebracht, und zwar vorzugsweise an dieses angeformt ist. Letzteres ist dann besonders vorteilhaft, wenn der hierdurch gebildete Heizlüfter, der beispielsweise in Fahrzeugsitze integriert werden kann, maschinell zusammengesetzt werden soll.

Das Kombinieren eines Lüfters mit dem erfindungsgemäßen Heizmodul kann so aussehen, dass der luftdurchströmbare Wärmeabgabebereich des Heizmoduls stromaufwärts des Lüfters in dessen laminaren Anströmbereich angeordnet ist. Bevorzugt ist jedoch eine Anordnung, bei der der luftdurchströmbare Wärmeabgabebereich des Heizmoduls stromabwärts des Lüfters in dessen Ausströmbereich angeordnet ist, da dort die Luftströmung eine Wirbelströmung ist und die Auskopplung der Wärme von den wärmeleitenden Lamellen in den Luftstrom in einer Wirbelströmung effizienter erfolgt. Außerdem ergibt sich beim Eintritt einer Wirbelströmung in radial angeordnete Lamellen, dass diese wie oben erwähnt zweidimensional von der Luft überstrichen werden.

Der Rahmen und das an diesen angebrachte oder an diesem integriert angeformte Lüftergehäuse können vorteilhafterweise einen gemeinsamen, im wesentlichen zylindrischen Luftströmungskanal bilden, wobei der Rahmen fakultativ mit strömungsführenden Stegen versehen ist, die in diesen Luftströmungskanal hineinreichen. Eine solche Ausbildung eines integrierten Heizlüfters ist besonders vorteilhaft in der Strömungsführung, wobei gleichzeitig eine sehr gleichmäßige Wärmeauskopplung von den PTC-Heizelementen in den Luftstrom gegeben ist. Der Einsatz der PTC-Helzelemente ist daher bei dieser bevorzugten Weiterbildung der Erfindung besonders effizient. Gleichzeitig baut der gesamt Heizlüfter sehr klein und flach, so dass insbesondere ein Einsatz in belüfteten Kraftfahrzeugsitzen problemlos möglich ist. Aufgrund der relativ geringen Ausströmgeschwindigkeiten der Luft aus einem solchen erfindungsgemäßen Heizlüfter ist der Einsatz in Kraftfahrzeugsitzen nicht nur möglich, sondern besonders vorteilhaft.

An den eben erwähnten strömungsführenden Stegen können konzentrisch angeordnete Führungsringe im Luftstrom angeordnet sein. Je nach Anwendungsfall kann es sehr vorteilhaft sein, diese Führungsringe aus der axialen Ebene heraus gekippt anzuordnen, insbesondere in einer konzentrischen, konischen Form, so dass der Luftstrom an den Führungsringen beim Ausströmen nach radial außen abgelenkt wird bzw. wenn die Führungsringe im Einströmbereich des Heizlüfters angeordnet sind, in die axiale Richtung umgelenkt wird. Zusätzlich zum Effekt der Luftströmführung, die je nach Anwendungsfall von der entsprechenden Luftstromablenkung profitiert, kann eine konzentrische konische Ausformung von Führungsringen die Gefahr eines Eintritts von Fremdkörpern in den Luftströmungskanal verringern.

Wenn der Rahmen und das Lüftergehäuse einen gemeinsamen Luftströmungskanal bilden, können mehrere PTC-Heizelemente ringförmig um den Luftströmungskanal herum angeordnet sein, also außerhalb von dessen Querschnittsfläche. Hierdurch ergibt sich keinerlei Abschattung durch die PTC-Heizelemente, so dass der Luftstrom nicht beeinträchtigt wird. Alternativ oder auch zusätzlich kann im Zentrum des im Wesentlichen zylindrischen Luftströmungskanal ein weiteres oder auch das einzige PTC-Heizelement oder mehrere solcher Elemente angeordnet sein. Auch hierdurch ergibt sich kaum ein Abschattungseffekt für den Luftstrom, da der davor oder dahinter sitzende Lüfter ohnehin zentral gelagert und meist auch mit einem zentral angeordneten Motor versehen ist.

Zum Zweck einer maschinellen Fertigung des erfindungsgemäßen elektrischen Heizmoduls mit integriertem Lüfter ist unterhalb und oberhalb der PTC-Heizelemente vorzugsweise jeweils ein Ringblech zur elektrischen Kontaktierung derselben angeordnet, wobei auf einem der Ringbleche die Wärmeübergangsabschnitte der wärmeleitenden Lamellen und auf dem anderen der beiden Ringbleche das Federelement aus weichelastischem Material bzw, der ringförmige Federabschnitt des Rahmens aufliegen. Die Ringbleche können hierbei Kontaktzungen aufweisen, die durch Öffnungen im Rahmen nach außen geführt sind. Weiterhin können die Lamellen als zusammenhängender Lamellenring vorgefertigt sein, so dass im Endeffekt die Montage des erfindungsgemäßen Heizlüfters vollautomatisch maschinell erfolgen kann.

Ausführungsbeispiele für ein erfindungsgemäßes Heizmodul werden im Folgenden anhand der beigefügten Zeichnungen näher beschrieben und erläutert. Es zeigen:
- Figur 1: eine perspektivische Darstellung eines ersten Ausführungsbeispiels eines erfindungsgemäßen Heizmoduls mit Lüfter;
- Figur 2: das Ausführungsbeispiel aus Figur 1 in einer Explosionsdarstellung;
- Figur 3: das Ausführungsbeispiel aus Figur 1 in einer Perspektive von unten;
- Figur 4: eine Explosionsdarstellung einer zweiten Ausführungsform eines erfindungsgemäßen Heizmoduls mit Lüfter;
- Figuren 5a, 5b: eine Perspektive und eine Draufsicht eines Lamellenrings in einer ersten Ausführung;
- Figuren 6a, 6b: eine Perspektive und eine Draufsicht eines Lamellenrings in einer zweiten Ausführung;
- Figuren 7a, 7b, 7c: eine Perspektive von oben, von unten und eine Draufsicht einer dritten Ausführung eines Lamellenrings;
- Figuren 8a, 8b: eine Perspektive und eine Draufsicht einer vierten Ausführung eines Lamellenrings;
- Figuren 9a, 9b: eine Perspektive und eine Draufsicht einer fünften Ausführung eines Lamellenrings;
- Figuren 10a, 10b: eine Perspektive und eine Draufsicht einer sechsten Ausführung eines Lamellenrings.

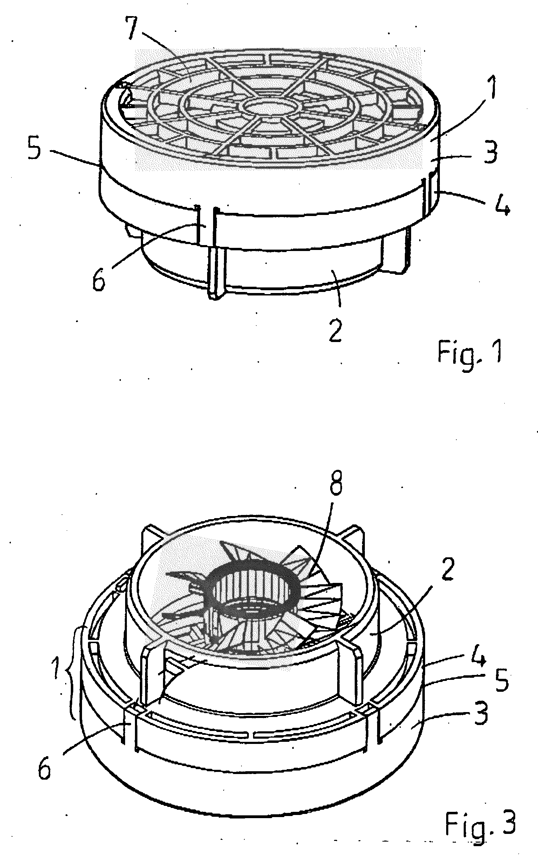

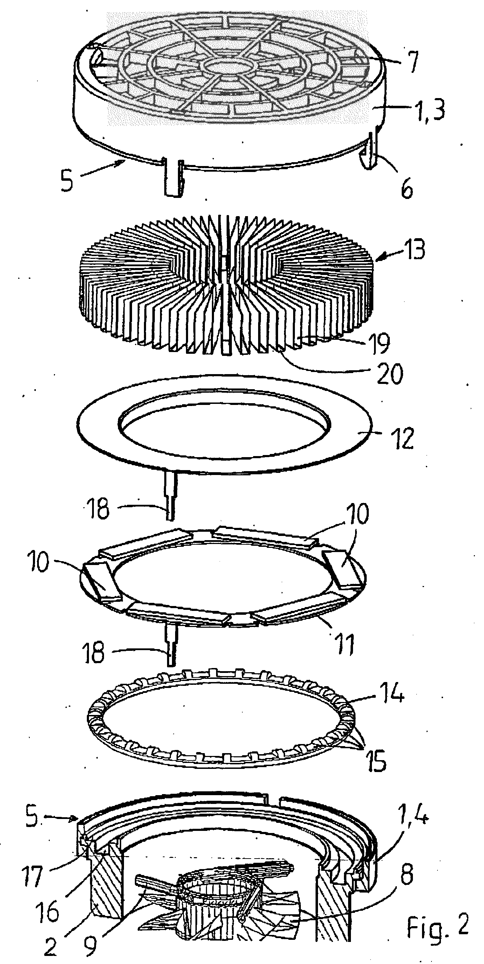

In den Figuren 1 bis 3 ist ein erstes Ausführungsbeispiel eines elektrischen Heizmoduls nach der Erfindung dargestellt, das mit einem integrierten Lüfter zu einem Heizlüfter kombiniert ist. Ein Rahmen 1 ist einstückig mit einem Lüftergehäuse 2 verbunden, welche beide eine im Wesentlichen zylindrische Formung aufweisen und in ihrem inneren einen strömungsgünstigen zylindrischen Kanal für den zu erwärmenden Luftstrom bilden. Der Rahmen 1 ist zweigeteilt und besteht aus einem Oberteil 3 sowie einem Unterteil 4, die in einer radialen Trennebene 5 aufeinander sitzen und von Schnapphaken 6 aneinander gehalten werden. Im Ausströmbereich der dargestellten Vorrichtung weist der Rahmen 1 Stege 7 auf, die in den Luftstrom hineinreichen und diesen führen. Das Lüftergehäuse 2 beinhaltet einen Diagonallüfter 8, der mit Halterungen 9 am Lüftergehäuse 2 befestigt ist. Beim Diagonallüfter 8 handelt es sich um einen an sich handelsüblichen Lüfter mit zentral angeordnetem (hier nicht dargestellten) Elektromotor. Um den Blick auf den Lüfter 8 freizugeben, ist in Figur 2 das Lüftergehäuse 2 teilgeschnitten dargestellt.

Stromabwärts des Diagonallüfters 8 sind in der Trennebene, jedoch außerhalb des zylindrischen Strömungskanals ringförmig um diesen herum sechs PTC-Heizelemente 10, auf einem unteren Ringblech 11 aufgeklebt, angeordnet. Darüber ist ein oberes Ringblech 12 aus Aluminium auf die PTC-Heizelemente 10 aufgelegt, um diese elektrisch sowie thermisch zu kontaktieren. Das obere Ringblech 12 gibt die aus den PTC-Heizelementen 10 ausgekoppelte Wärme an einen Lamellenring 13 weiter, welcher einen erfindungsgemäß ringförmig ausgebildeten Wärmeabgabebereich bildet, indem seine einzelnen Lamellen radial zum Zentrum hin in den zylindrischen Luftströmungskanal hineinreichen.

Die Baueinheit aus unterem Ringblech 11, PTC-Heizelementen 10, oberem Ringblech 12 und Lamellenring 13 wird zwischen dem Oberteil 3 und dem Unterteil 4 des Rahmens 1 gehalten. Hierfür ist im Unterteil 4 des Rahmens 1 eine Aufnahme 17 vorgesehen. Für einen effizienten Wärmeübergang von den Breitseiten der PTC-Heizelemente 10 über das obere Ringblech 12 auf den Lamellenring 13 ist ein hoher Anpressdruck unerlässlich. Dieser wird durch ein weichelastisches Federelement 14, das hier durch Einfräsen von Ausnehmungen 15 aus einer handelsüblichen O-Ring-Dichtung gefertigt wurde, gewährleistet. Denn dieses erzeugt im Zusammenwirken mit den Schnapphaken 6 eine Anpresskraft zwischen dem Lamellenring 13 und dem oberen Ringblech 12 sowie zwischen dem oberen Ringblech 12 und den PTC-Heizelementen 10.

Wie anhand von Figur 2 deutlich zu erkennen ist, wirkt die Anpresskraft im Gegensatz zum bisherigen Stand der Technik in axialer Richtung auf die Lamellen des Wärmeabgabebereichs, also parallel zur Luftströmung. Da hierdurch die Schmalseiten der Lamellen mit der Anpresskraft beaufschlagt werden, können diese aufgrund ihrer in dieser Richtung höheren Stabilität größere Toleranzen in der Anpresskraft verkraften, so dass ein maschinelles Zusammensetzen des dargestellten Heizlüfters problemlos möglich ist. Die Möglichkeit zur maschinellen Fertigung wird noch dadurch unterstützt, dass für das Federelement 14 ein Dichtungssitz 16 im Unterteil 4 des Rahmens 1 vorgesehen ist, und dass die beiden Ringbleche 11, 12 jeweils eine Kontaktzunge 18 tragen, die bei zusammengesetztem Rahmen 1 aus diesem herausragen und zur elektrischen Kontaktierung der PTC-Heizelemente 10 verwendet werden können.

Die Verwendung eines Diagonallüfters 8 und die Anordnung des Lamellenrings 13, also des luftdurchströmbaren Wärmeabgabebereichs stromabwärts des Diagonallüfters 8 sowie die entsprechende Formung des Oberteils 3 des Rahmens 1 führt dazu, dass der Lamellenring 13 nicht nur axial, sondern auch mit einer diagonalen Komponente von innen nach außen durchströmt wird. Die radiale Anordnung der aus U-Profilen 19 bestehenden einzelnen Lamellen des Lamellenrings 13 unterstützt diese Luftführung. Die Lamellen bestehen aller-dings nicht aus durchgehenden U-Profilen 19; der U-Rücken ist vielmehr nur an der radial außen liegenden Seite vorhanden und bildet dort Wärmeübergangsabschnitte 20, mit denen der Lamellenring 13 auf dem oberen Ringblech 12 aufliegt und vermittels des Federelements 14 auf das Ringblech 12 aufgepresst wird.

Das in den Figuren 1 bis 3 dargestellte Ausführungsbeispiel stellt einen besonders kompakten und dennoch effizienten Heizlüfter dar, der mit seinen PTC-Heizelementen 10 selbstregelnd, sicher und sehr schnell reagierend eine effiziente Beheizung beispielsweise von belüfteten Kraftfahrzeugsitzen ermöglicht. Durch Abschalten der PTC-Heizelemente kann der Heizlüfter wahlweise als Lüfter zur Kühlung dienen. Die gezeigte Anordnung mit einem ringförmigen Wärmeabgabebereich und einem davor geschalteten Diagonallüfter, der selbstverständlich auch ein Axiallüfter sein kann, stellt gleichzeitig sicher, dass ein hohes Luftvolumen bei geringer Leistungsaufnahme des Lüfters 8 mit vorteilhaft geringen Ausströmgeschwindigkeiten durchgeleitet werden kann.

Anhand Figur 2 sei ergänzt, dass das Lüftergehäuse 2 auch lösbar am Rahmen befestigt sein kann. Es ist auch vorstellbar, dass zumindest der Rahmen 1 aus weichelastischem Material, beispielsweise Hartgummi besteht, so dass bei einer entsprechenden Ausformung der Aufnahme 17 oder einer vom Rahmen 1 nach innen eingezogenen Gehäuselippe auf das separate Federelement 14 verzichtet werden kann, da die Federkraft vom Rahmen 1 bzw. einer entsprechenden Lippe erzeugt wird.

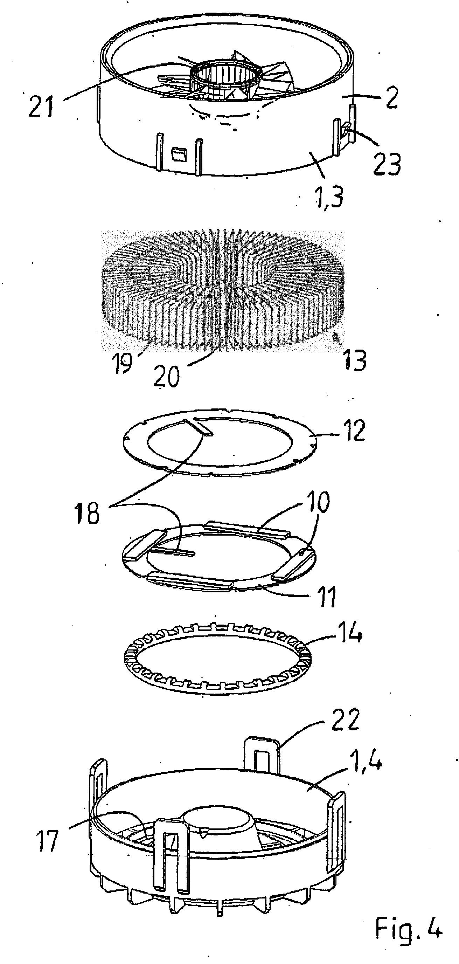

Selbstverständlich ist es auch möglich, den Wärmeabgabebereich und somit den Lamellenring 13 stromaufwärts des Lüfters, also in dessen laminarer Anströmzone anzuordnen. Ein entsprechender Aufbau ist in der Figur 4 als zweites Ausführungsbeispiel in einer Explosionsdarstellung gezeigt. Das hier verwendete Gehäuse 1 besteht wiederum aus einem Oberteil 3 und einem Unterteil 4, wobei das Oberteil 3 gleichzeitig als Lüftergehäuse 2 für einen Axiallüfter 21 dient. Das Unterteil 4 des Rahmens 1 wird hier am Oberteil 3 mittels Rastlaschen 22 und entsprechenden Rastvorsprüngen 23 festgelegt.

Das in Figur 4 gezeigte zweite Ausführungsbeispiel eines Heizlüfters zeigt außer der "umgekehrten" Anordnung von Wärmeabgabebereich des Heizmoduls und Lüfter eine weitere Modifikation: Die ringförmige Baueinheit, bestehend aus vier PTC-Heizelementen 10, dem diese tragenden unteren Ringblech 11, dem oberen Ringblech 12 und dem weichelastischen sowie thermisch und elektrisch isolierenden Federelement 14 ist diesmal nicht außerhalb des in etwa zylindrischen Durchströmbereichs angeordnet, sondern so, dass die Wärmeübergangsabschnitte 20 der Lamellen des Lamellenrings 13 in radialer Richtung etwa mittig im ringförmigen Durchströmbereich liegen. Hierfür ist die Aufnahme 17 im Unterteil 4 des Rahmens 1 etwa mittig im Einströmbereich der vom Axiallüfter 21 angesaugten Luft angeordnet. Der Vorteil dieser Anordnung der Heizelement-Baugruppe besteht darin, dass sich die aus den PTC-Heizelementen 10 ausgekoppelte Wärme sehr schnell und gleichmäßig auf die gesamte Lamellenfläche des Lamellenrings 13 verteilt. Ferner wird so auch die ringförmige Baugruppe mit den PTC-Heizelementen 10 direkt vom Luftstrom umströmt, so dass eine zusätzliche Wärmeauskopplung in den Luftstrom hinein stattfindet. Dies ist aufgrund der Widerstands-Temperatur-Charakteristik eines PTC-Heizelements sehr vorteilhaft und führt zu einer höheren Effizienz des Heizmoduls.

Das untere Ringblech 11 und das obere Ringblech 12 weisen jeweils eine Kontaktzunge 18 auf, die zum Zentrum des zylindrischen Luftströmungskanals hin weisen, um zusammen mit dem (nicht dargestellten) Lüftermotor kontaktiert zu werden.

In entsprechender Weise sind andere Modifikationen der gezeigten Ausführungsbeispiele möglich. So kann beispielsweise der zentrale Bereich des zylindrischen Strömungskanals, der durch den Lüftermotor ohnehin abgeschattet wird, zur Anordnung eines runden oder mehrerer sternförmig oder sonst wie angeordneter PTC-Heizelemente genutzt werden. Dies kann auch zusätzlich zu einem äußeren PTC-Heizelement-Ring in der in den Figuren 1 bis 3 dargestellten Art kombiniert werden. Ebenso ist es möglich, sowohl stromaufwärts als auch stromabwärts eines Lüfters ein elektrisches Heizmodul nach der vorliegenden Erfindung anzuordnen, oder umgekehrt stromaufwärts und stromabwärts eines Lamellenrings jeweils einen Lüfter einzusetzen. Selbstverständlich kann ein erfindungsgemäßes elektrisches Heizmodul auch mit einem Radiallüfter kombiniert werden.

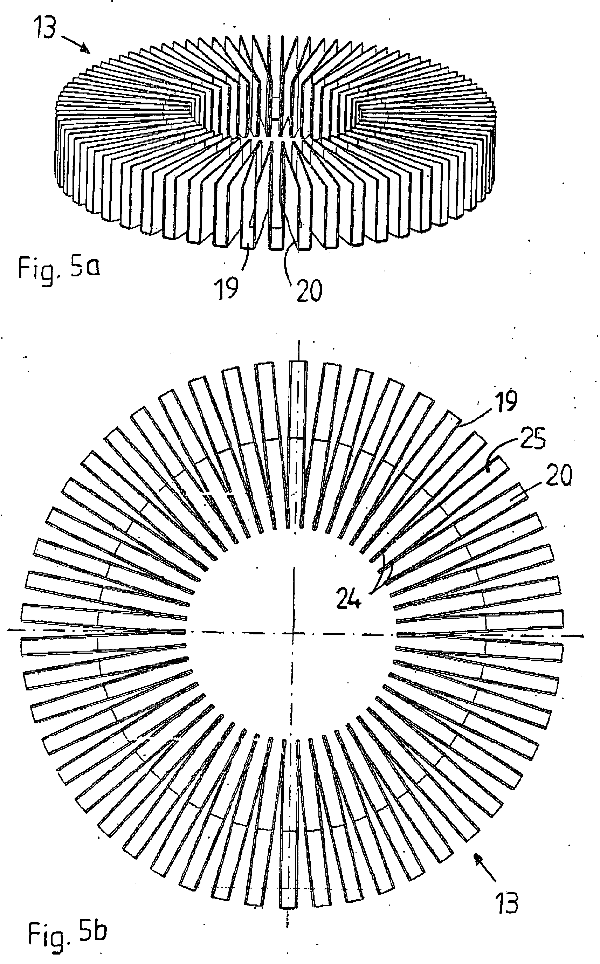

Die Figuren 5 bis 10 zeigen schließlich unterschiedliche Ausführungsbeispiele von Lamellenringen 13, die sich sowohl in ihrer Fertigungstechnik als auch in der jeweiligen radialen Lage der Wärmeübergangsabschnitte 20 unterscheiden.

In den Figuren 5a und 5b ist ein Lamellenring 13 dargestellt, der aus einzelnen U-Profilen 19, die im Wesentlichen radial verlaufen, zusammengesetzt ist. Hierfür sind die U-Profile 19 radial innenliegend mit Laser-Schweißpunkten 24 mechanisch wie auch thermisch verbunden. Die U-Rücken 25 der U-Profile 19 erstrecken sich nur über einen radial außenliegenden Abschnitt und bilden die Wärmeübergangsabschnitte 20 zum thermischen Kontaktieren der PTC-Heizelemente 10 bzw. des unteren oder, je nach Ausführungsform, des oberen Ringblechs 11, 12.

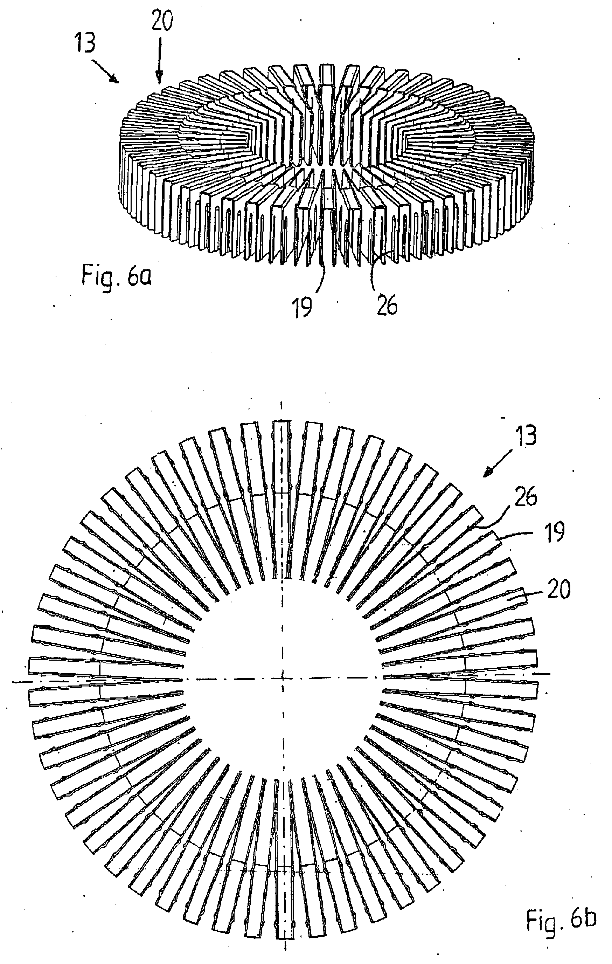

In den Figuren 6a und 6b ist ein sehr ähnlicher Aufbau eines Lamellenrings 13 mittels U-Profilen 19 dargestellt. Die U-Rücken 25 der U-Profile 19 bilden auch hier wieder die Wärmeübergangsabschnitte 20, wobei diese jedoch nach oben zeigen und für den Einsatz stromaufwärts eines Lüfters gedacht sind. Gleichzeitig sind die U-Profile 19 mit Sicken 26 versehen, um einerseits deren Stabilität in Axialrichtung zu erhöhen (was einen höheren Anpressdruck auf die PTC-Heizelemente 10 bzw. das entsprechende Ringblech 11, 12 ermöglicht), und zum anderen wird die Luft, die durch den Lamellenring 13 strömt, zusätzlich zu verwirbeln, was einen besseren Wärmeübergang aus den Lamellen 19 in den Luftstrom zur Folge hat.

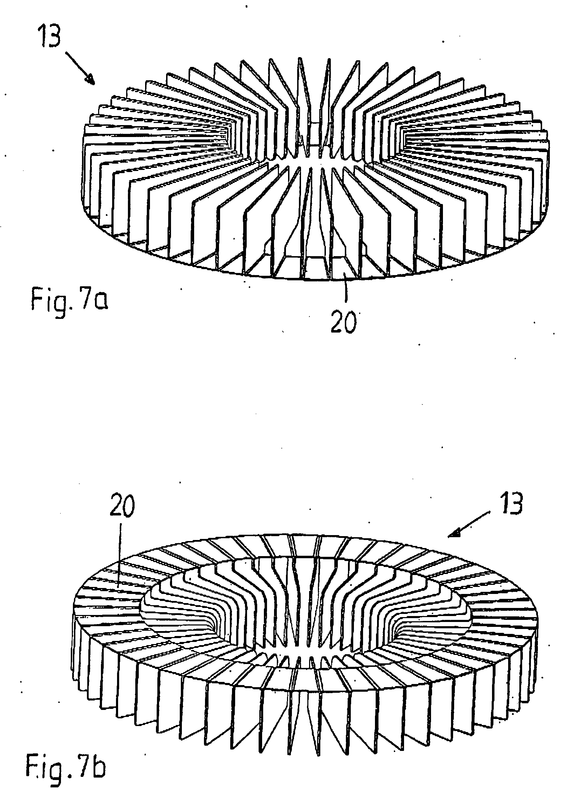

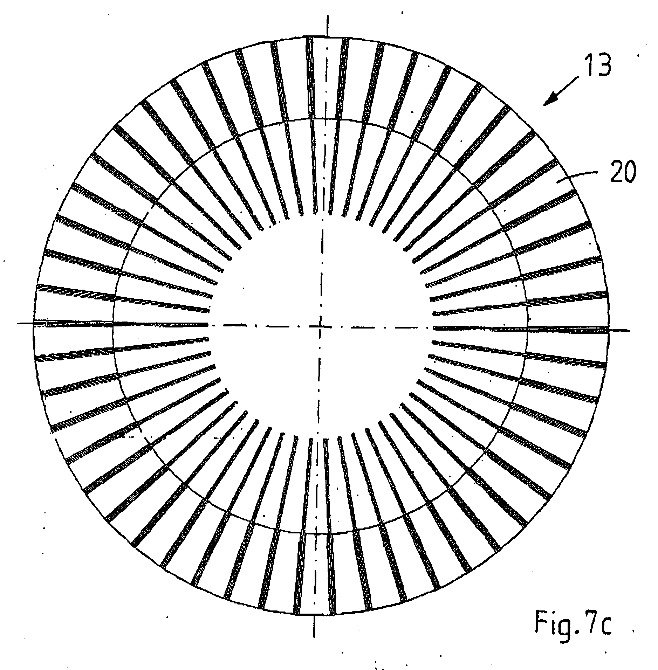

Der Lamellenring 13, der in den Figuren 7a, 7b und 7c dargestellt ist, besteht nicht aus einer Mehrzahl von einzeln gefertigten Lamellen bzw. Profilen, sondern aus einem gefalteten Formblech. Dementsprechend ist der hier wiederum radial außenliegende Wärmeübergangsabschnitt 20, der nun nicht mehr aus einzelnen U-Rücken 25 gebildet ist, in Umfangsrichtung durchgehend ausgebildet, was eine höhere Heizleistung der PTC-Heizelemente 10 ermöglicht, da die Wärmeauskopplung in den Lamellenring 13 höher ist. Anhand Figur 7b kann man außerdem sehr gut erkennen, dass der Lamellenring 13 in Radialrichtung axial abgestuft ausgebildet ist.

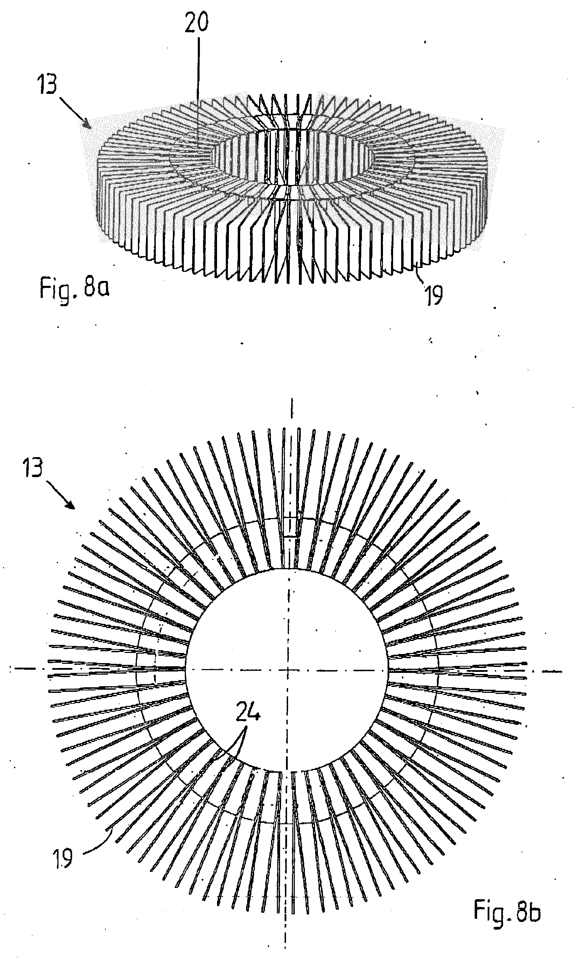

Der in den Figuren 8a und 8b dargestellte Lamellenring 13 besteht wiederum aus einzelnen U-Profilen 19, die mittels Schweißpunkten 24 mechanisch und thermisch untereinander verbunden sind. Im Gegensatz zum in den Figuren 5a und 5b dargestellten Lamellenring 13 sind hier die U-Rücken 25 der U-Profile 19 radial innenliegend angeordnet und setzen sich nach radial außen nicht fort, sondern bilden die Wärmeübergangsabschnitte 20 zur direkten oder indirekten Kontaktierung der PTC-Heizelemente 10. Dieser Lamellenring 13 eignet sich also für den Einsatz in einem elektrischen Heizmodul, in dem die PTC-Heizelemente 10 zentral innenliegend angeordnet sind.

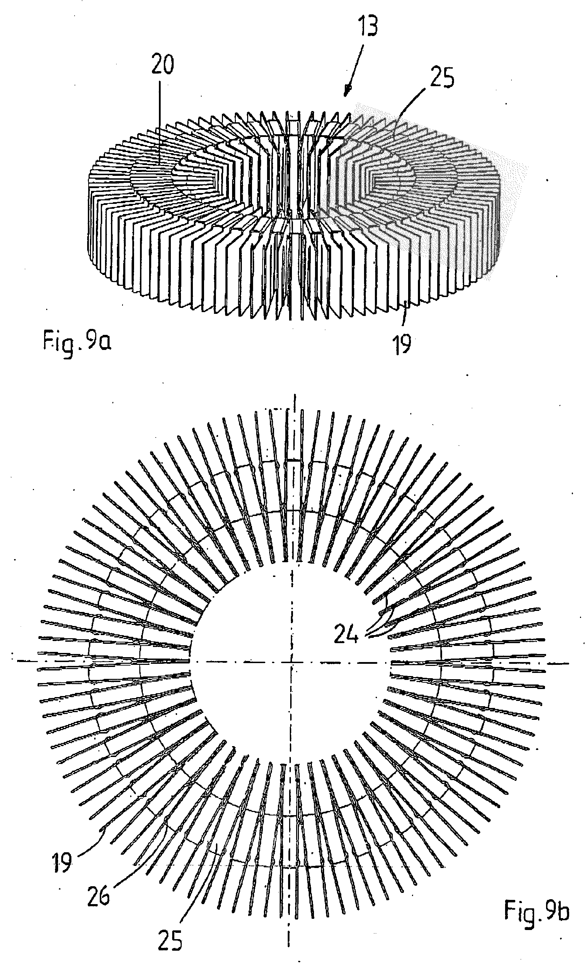

In den Figuren 9a und 9b ist der Lamellenring 13 aus Figur 4 dargestellt. Er besteht wiederum aus einer Mehrzahl von U-Profilen 19, die über Schweißpunkte 24 mechanisch und thermisch untereinander verbunden sind, wobei wiederum die U-Rücken 25 nicht über die gesamte Länge der U-Profile 19 verlaufen, sondern sich radial nur soweit erstrecken, wie es zur Bildung der Wärmeübergangsabschnitte 20 notwendig ist. Die Wärmeübergangsabschnitte 20 sind für jedes U-Profil 19 etwa mittig angeordnet, so dass die Wege zur Wärmeleitung in jedem U-Profil 19 vorteilhaft kurz gehalten sind. Im Bereich der U-Rücken 25 sind wiederum jeweils vier Sicken 26 an jedem U-Profil 19 angebracht, so dass die U-Profile 19 und somit insgesamt der Lamellenring 13 eine hohe Stabilität aufweisen.

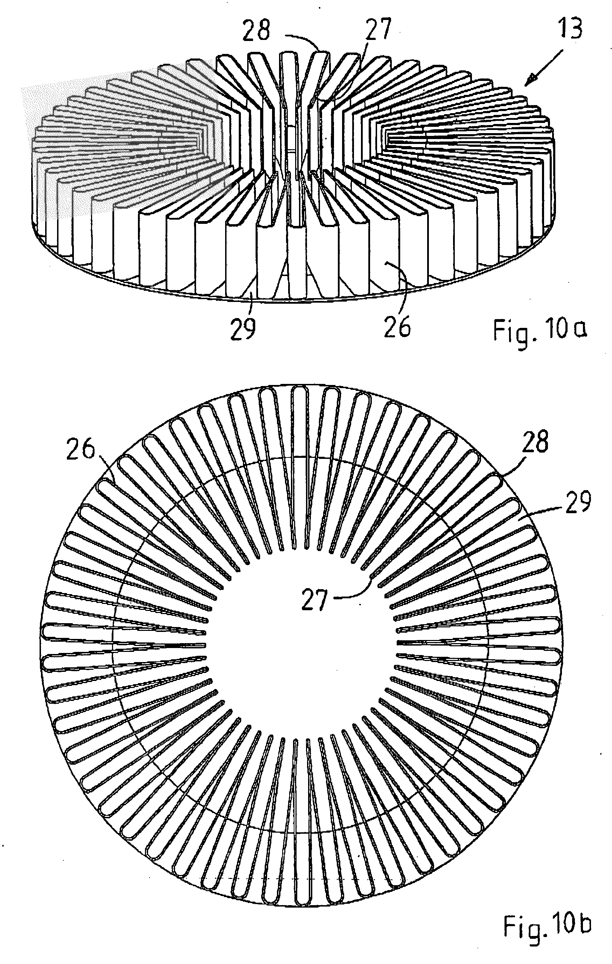

Die Figuren 10a und 10b schließlich zeigen eine alternative Variante des Lamellenrings 13 eines erfindungsgemäßen Heizmoduls. Die wärmeleitenden Lamellen werden durch ein mäanderförmig gebogenes Metallblech 26 gebildet, dessen zum Zentrum des Wärmeabgabebereichs hin weisenden Biegungen 27 jeweils einen kleineren Biegeradius aufweisen, als die nach außen weisenden Biegungen 28. Hierdurch ergibt sich die insgesamt ringförmige Ausgestaltung des Lamellenrings 13. Radial außenliegend ist ein Wärmeübergangs-Ringblech 29 auf den Lamellenring 13 aufgesetzt, um den Wärmeübergang zu den PTC-Heizelementen bzw. dessen Ringblechen 11, 12 zu optimieren.

## Patentansprüche

1. Elektrisches Heizmodul zur Luftstromerwärmung, insbesondere in Fahrzeugen, mit mindestens einem PTC-Heizelement (10) und mindestens einem daran angrenzenden, luftdurchströmbaren Wärmeabgabebereich (13) mit wärmeleitenden Lamellen, die mit dem PTC-Heizelement (10) in Wirkverbindung stehen, sowie mit einem das PTC-Heizelement (10) und die wärmeleitenden Lamellen (13) zu einem Modul zusammenfassenden Rahmen (1), wobei der Wärmeabgabebereich ringförmig, insbesondere kreisrund ausgebildet ist und das mindestens eine PTC-Heizelement (10) flach mit einer oberen und einer unteren Kontaktierungsfläche ausgebildet und derart angeordnet ist, dass die Kontaktierungsflächen im wesentlichen in radialen Ebenen liegen,
**dadurch gekennzeichnet,**
**dass** die wärmeleitenden Lamellen (13) im Wesentlichen radial verlaufend angeordnet sind, dass die wärmeleitenden Lamellen (13) Wärmeübergangsabschnitte (20) aufweisen, mit denen sie indirekt über elektrischen Strom führende Kontaktelemente (11, 12) und/oder direkt auf den oberen und/oder unteren Kontaktierungsflächen des PTC-Heizelements (10) aufliegen, dass der Rahmen (1) in einer im Wesentlichen radial verlaufenden Trennebene (5) teilbar ist, und dass an der Trennebene (5) des Rahmens (1) ein Federelement (14) zum axialen Anpressen der wärmeleitenden Lamellen (13) an das PTC-Heizelement (10) und/oder die Kontaktelemente (11, 12) in den Rahmen (1) eingesetzt ist, oder dass der Rahmen (1) zumindest teilweise aus weichelastischem Material besteht und an der Trennebene (5) einen im wesentlichen ringförmigen Federabschnitt zum axialen Anpressen der wärmeleitenden Lamellen (13) an das PTC-Heizelement (10) und/oder die Kontaktelemente (11, 12) aufweist.

2. Elektrisches Heizmodul nach Anspruch 1,
**dadurch gekennzeichnet,**
**dass** das Federelement (14) aus weichelastischem Material, insbesondere einem Elastomer besteht.

3. Elektrisches Heizmodul nach Anspruch 2,
**dadurch gekennzeichnet,**
**dass** das Federelement (14) aus einer O-Ring-Dichtung gebildet ist.

4. Elektrisches Heizmodul nach Anspruch 3,
**dadurch gekennzeichnet,**
**dass** die O-Ring-Dichtung mit umfangsverteilten Ausnehmungen (15) versehen ist.

5. Elektrisches Heizmodul nach mindestens einem der Ansprüche 1 bis 4,
**dadurch gekennzeichnet,**
**dass** die wärmeleitenden Lamellen (13) im Wesentlichen aus U-Profilen (19) bestehen, deren U-Rücken (25) die Wärmeübergangsabschnitte (20) bilden.

6. Elektrisches Heizmodul nach Anspruch 5,
**dadurch gekennzeichnet,**
**dass** die U-Schenkel der wärmeleitenden Lamellen (13) mit Oberflächenstrukturierungen, insbesondere sickenartigen Strukturen (26) zur Lenkung und/oder Verwirbelung des Luftstroms versehen sind.

7. Elektrisches Heizmodul nach mindestens einem der Ansprüche 1 bis 4,
**dadurch gekennzeichnet,**
**dass** die wärmeleitenden Lamellen (13) aus einem oder mehreren, mäanderförmig gebogenen Metallblechen (26) gebildet sind, wobei die zum Zentrum des Wärmeabgabebereichs hin weisende Biegungen (27) jeweils einen kleineren Biegeradius aufweisen als die nach außen weisende Biegungen (28).

8. Elektrisches Heizmodul nach Anspruch 7,
**dadurch gekennzeichnet,**
**dass** die zum Zentrum des Wärmeabgabebereichs hin weisenden Biegungen (27) jeweils zu einem Knick zusammengepresst sind.

9. Elektrisches Heizmodul einem der Ansprüche 7 oder 8,
**dadurch gekennzeichnet,**
**dass** ein Wärmeübergangs-Ringblech (29) als Wärmeübergangsabschnitt auf die wärmeleitenden Lamellen (13) aufgebracht ist.

10. Elektrisches Heizmodul nach mindestens einem der Ansprüche 1 bis 9,
**dadurch gekennzeichnet,**
**dass** ein Lüftergehäuse (2) am Rahmen (1) angebracht oder an diesen angeformt ist.

11. Elektrisches Heizmodul nach Anspruch 10,
**dadurch gekennzeichnet,**
**dass** im Lüftergehäuse (2) ein Axiallüfter (21) oder Diagonallüfter (8) sitzt.

12. Elektrisches Heizmodul nach einem der Ansprüche 10 oder 11,
**dadurch gekennzeichnet,**
**dass** der luftdurchströmbare Wärmeabgabebereich stromaufwärts des Lüfters (8, 21) in dessen laminaren Anströmbereich angeordnet ist.

13. Elektrisches Heizmodul nach mindestens einem der Ansprüche 10 bis 12,
**dadurch gekennzeichnet,**
**dass** der luftdurchströmbare Wärmeabgabebereich stromabwärts des Lüfters (8, 21) in dessen Ausströmbereich angeordnet ist.

14. Elektrisches Heizmodul nach mindestens einem der Ansprüche 10 bis 13,
**dadurch gekennzeichnet,**
**dass** der Rahmen (1) und das Lüftergehäuse (2) einen gemeinsamen, im Wesentlichen zylindrischen Luftströmungskanal bilden.

15. Elektrisches Heizmodul nach Anspruch 14,
**dadurch gekennzeichnet,**
**dass** der Rahmen mit in den Luftströmungskanal reichenden, strömungsführenden Stegen (7) versehen ist.

16. Elektrisches Heizmodul nach Anspruch 15,
**dadurch gekennzeichnet,**
**dass** im Luftströmungskanal an den Stegen (7) konisch geformte, konzentrisch angeordnete Führungsringe zum radialen Umlenken des ein- oder ausströmenden Luftstroms angebracht sind.

17. Elektrisches Heizmodul nach mindestens einem der Ansprüche 14 bis 16,
**dadurch gekennzeichnet,**
**dass** mehrere PTC-Heizelemente (10) ringförmig um den Luftströmungskanal herum angeordnet sind.

18. Elektrisches Heizmodul nach mindestens einem der Ansprüche 14 bis 17,
**dadurch gekennzeichnet,**
**dass** das mindestens eine PTC-Heizelement (10) im Zentrum des Luftströmungskanals angeordnet ist.

19. Elektrisches Heizmodul nach Anspruch 2 und mindestens einem der Ansprüche 14 bis 18,
**dadurch gekennzeichnet,**
**dass** im Rahmen (1) unterhalb und oberhalb der PTC-Heizelemente (10) ein unteres Ringblech (11) und ein oberes Ringblech (12) zur elektrischen Kontaktierung der PTC-Heizelemente (10) angeordnet sind, wobei auf einem der Ringbleche (12) die Wärmeübergangsabschnitte (20) der wärmeleitenden Lamellen (13) und auf dem anderen der beiden Ringbleche (11) das Federelement (14) aus weichelastischem Material aufliegen.

20. Elektrisches Heizmodul nach Anspruch 19,
**dadurch gekennzeichnet,**
**dass** die Ringbleche (11, 12) Kontaktzungen (18) aufweisen, die durch Öffnungen im Rahmen (1) nach außen geführt sind.

21. Elektrisches Heizmodul nach einem der Ansprüche 19 oder 20,
**dadurch gekennzeichnet,**
**dass** die wärmeleitenden Lamellen als zusammenhängender Lamellenring (13) vorgefertigt sind

## Claims

1. Electric heating module for heating air flow, particularly in vehicles, comprising at least one PTC heating element (10) and at least one heat dissipating area (13) adjacent thereto through which air can flow, having heat conducting ribs, which are in effective contact with the PTC heating element (10) as well as a frame (1) combining the PTC heating element (10) and the heat conducting ribs (13) to form a module, wherein the heat dissipating area is configured in the shape of a ring, in particular circular, and at least one PTC heating element (10) is configured flat with an upper and a lower contacting surface and is arranged such that the contacting surfaces are positioned substantially in radial planes,
**characterised in that**
the heat conducting ribs (13) are arranged extending substantially in a radial direction, the heat conducting ribs (13) are provided with heat transfer sections (20) by which they are supported indirectly via contact elements (11, 12) conducting electric current and/or directly on the upper and/or the lower contacting surfaces of the PTC heating element (10), and **in that** the frame (1) can be separated at a substantially radially extending parting plane (5), and a spring element (14) is inserted into the frame (1) at the parting plane (5) of the frame (1) for axially pressing the heat conducting ribs (13) against the PTC heating element (10) and/or the contact elements (11, 12), or that the frame (1) at least partially comprises flexible material and has a substantially circular spring section at the parting plane (5) for axially pressing the heat conducting ribs (13) against the PTC heating element (10) and/or the contact elements (11, 12).

2. Electric heating module according to Claim 1,
**characterised in that**
the spring element (14) comprises flexible material, in particular an elastomer.

3. Electric heating module according to Claim 2,
**characterised in that**
the spring element (14) is formed from an O-ring seal.

4. Electric heating module according to Claim 3,
**characterised in that**
the O-ring seal is provided with circumferential recesses (15).

5. Electric heating module according to at least one of Claims 1 to 4,
**characterised in that**
the heat conducting ribs (13) generally comprise U-profiles (19), with U-backs (25) of the profiles forming the heat transfer sections (20).

6. Electric heating module according to Claim 5,
**characterised in that**
the U-legs of the heat conducting ribs (13) are provided with surface structures, in particular bead-like surface structures (26) for guiding and/or eddying the air flow.

7. Electric heating module according to at least one of Claims 1 to 4,
**characterised in that**
the heat conducting ribs (13) are formed from one or more metal sheets (26) bent in a meandering shape, wherein the bends (27) that point towards a centre of the heat dissipating area each have a smaller bending radius than the bends that point outwards (28).

8. Electric heating module according to Claim 7,
**characterised in that**
the bends (27) pointing towards a centre of the heat dissipating area are each compressed to a fold.

9. Electric heating module according to Claim 7 or 8,
**characterised in that**
a heat transferring circular metal sheet (29) is positioned onto the heat conducting ribs (13) as heat transfer section.

10. Electric heating module according to at least one of Claims 1 to 9,
**characterised in that**
a ventilator housing (2) is mounted onto the frame (1) or formed thereon.

11. Electric heating module according to Claim 10
**characterised in that**
an axial fan (21) or a diagonal fan (8) is located in the ventilator housing (2).

12. Electric heating module according to Claim 10 or 11,
**characterised in that**
the heat dissipating area, through which air can flow, is arranged upstream from the fan (8, 21) in a laminar inflow area thereof.

13. Electric heating module according to at least one of Claims 10 to 12,
**characterised in that**
the heat dissipating area, through which air can flow, is arranged downstream from the fan (8, 21) in an outflow area thereof.

14. Electric heating module according to at least one of Claims 10 to 13,
**characterised in that**
the frame (1) and the ventilator housing (2) together form a substantially cylindrical air flow channel.

15. Electric heating module according to Claim 14,
**characterised in that**
the frame is provided with bars (7) extending into the air flow channel and guiding an air flow stream.

16. Electric heating module according to Claim 15,
**characterised in that**
conically shaped, concentrically arranged guide rings are mounted in the air flow channel at the bars (7) for radial deflection of out flowing or in flowing air flow.

17. Electric heating module according to at least one of Claims 14 to 16,
**characterised in that**
several PTC heating elements (10) are arranged circularly around the air flow channel.

18. Electric heating module according to at least one of Claims 14 to 17,
**characterised in that**
the at least one PTC heating element (10) is arranged in a centre of the air flow channel.

19. Electric heating module according to Claim 2 and at least one of Claims 14 to 18,
**characterised in that**
in the frame (1) below and above the PTC heating elements (10), a lower circular metal sheet (11) and an upper circular metal sheet (12) are arranged for electrically contacting the PTC heating elements (10), wherein the heat transfer sections (20) of the heat conducting ribs (13) are supported on one of the circular metal sheets (12) and the spring element (14) made from flexible material is supported on the other one of the two circular metal sheets (11).

20. Electric heating module according to Claim 19,
**characterised in that**
the circular metal sheets (11, 12) are provided with contact protrusions (18), which extend outwards through openings in the frame (1).

21. Electric heating module according to Claim 19 or 20,
**characterised in that**
the heat conducting ribs are pre-finished as a connected ring of ribs (13).

## Revendications

1. Module chauffant électrique pour le chauffage de flux d'air, notamment dans des véhicules, avec au moins un élément de chauffage PTC (10) et avec au moins une zone de distribution de chaleur (13), adjacente à l'élément de chauffage, pouvant être parcourue par de l'air et comportant des lamelles qui sont conductrices de chaleur et qui sont en liaison active avec l'élément de chauffage PTC (10), ainsi qu'avec un cadre (1) réunissant en un module l'élément de chauffage PTC (10) et les lamelles conductrices de chaleur (13), la zone de distribution de chaleur étant conçue de forme annulaire, notamment circulaire, et l'au moins un élément de chauffage PTC (10) étant conçu plat avec une surface de contact supérieure et une surface de contact inférieure et étant agencé de telle sorte que les surfaces de contact se trouvent globalement dans des plans radiaux,
**caractérisé en ce que** les lamelles conductrices de chaleur (13) sont agencées de manière à s'étendre globalement de manière radiale, **en ce que** les lamelles conductrices de chaleur (13) comportent des tronçons de transfert de chaleur (20) avec lesquels elles reposent, indirectement par l'intermédiaire d'éléments de contact (11, 12) conducteurs de courant électrique et/ou directement, sur les surfaces de contact supérieures et/ou inférieures de l'élément de chauffage PTC (10), **en ce que** le cadre (1) peut être divisé dans un plan de séparation (5) s'étendant globalement de manière radiale et **en ce qu'**un élément formant ressort (14) est placé sur le plan de séparation (5) du cadre (1) pour presser axialement les lamelles conductrices de chaleur (13) contre l'élément de chauffage PTC (10) et/ou contre les éléments de contact (11, 12) dans le cadre (1) ou **en ce que** le cadre (1) est constitué au moins en partie d'un matériau souple et élastique et comporte sur le plan de séparation (5) un tronçon formant ressort globalement annulaire pour presser axialement les lamelles conductrices de chaleur (13) contre l'élément de chauffage PTC (10) et/ou contre les éléments de contact (11, 12).

2. Module chauffant électrique selon la revendication 1, **caractérisé en ce que** l'élément formant ressort (14) est en un matériau souple et élastique, notamment un élastomère.

3. Module chauffant électrique selon la revendication 2, **caractérisé en ce que** l'élément formant ressort (14) est formé d'un joint torique d'étanchéité.

4. Module chauffant électrique selon la revendication 3, **caractérisé en ce que** le joint torique d'étanchéité est muni d'évidements (15) répartis sur sa circonférence.

5. Module chauffant électrique selon au moins l'une des revendications 1 à 4, **caractérisé en ce que** les lamelles conductrices de chaleur (13) sont globalement constituées de profils en U (19) dont les dos de U (25) constituent les tronçons de transfert de chaleur (20).

6. Module chauffant électrique selon la revendication 5, **caractérisé en ce que** les branches de U des lamelles conductrices de chaleur (13) sont munies de structures surfaciques, notamment de structures du type moulures (26), pour dévier et/ou faire tourbillonner le flux d'air.

7. Module chauffant électrique selon au moins l'une des revendications 1 à 4, **caractérisé en ce que** les lamelles conductrices de chaleur (13) sont formées d'une ou plusieurs tôles métalliques (26) courbées en forme de méandres, les courbures (27) dirigées vers le centre de la zone de distribution de chaleur ayant à chaque fois un plus petit rayon de courbure que les courbures (28) dirigées vers l'extérieur.

8. Module électrique chauffant selon la revendication 7, **caractérisé en ce que** les courbures (27) dirigées vers le centre de la zone de distribution de chaleur sont à chaque fois comprimées les unes contre les autres en un pli.

9. Module chauffant électrique selon l'une des revendications 7 ou 8, **caractérisé en ce qu'**une tôle annulaire de transfert de chaleur (29) est appliquée comme tronçon de transfert de chaleur sur les lamelles conductrices de chaleur (13).

10. Module chauffant électrique selon au moins l'une des revendications 1 à 9, **caractérisé en ce qu'**un carter de ventilateur (2) est placé sur le cadre (1) ou formé sur celui-ci.

11. Module chauffant électrique selon la revendication 10, **caractérisé en ce qu'**un ventilateur axial (21) ou un ventilateur diagonal (8) se trouve dans le carter de ventilateur (2).

12. Module chauffant électrique selon l'une des revendications 10 ou 11, **caractérisé en ce que** la zone de distribution de chaleur pouvant être parcourue par de l'air est agencée en amont du ventilateur (8, 21) dans la zone d'afflux laminaire de celui-ci.

13. Module chauffant électrique selon au moins l'une des revendications 10 à 12, **caractérisé en ce que** la zone de distribution de chaleur pouvant être parcourue par de l'air est agencée en aval du ventilateur (8, 21) dans la zone d'écoulement de celui-ci.

14. Module chauffant électrique selon au moins l'une des revendications 10 à 13, **caractérisé en ce que** le cadre (1) et le carter de ventilateur (2) forment un canal de flux d'air commun globalement cylindrique.

15. Module chauffant électrique selon la revendication 14, **caractérisé en ce que** le cadre est muni de traverses (7) atteignant le canal de flux d'air et guidant l'écoulement.

16. Module chauffant électrique selon la revendication 15, **caractérisé en ce que**, dans le canal de flux d'air, des bagues de guidage de forme conique et agencées de manière concentrique sont placées sur les traverses (7) pour dévier radialement le flux d'air entrant ou sortant.

17. Module chauffant électrique selon au moins l'une des revendications 14 à 16, **caractérisé en ce que** plusieurs éléments de chauffage PTC (10) sont agencés en forme d'anneau autour du canal de flux d'air.

18. Module chauffant électrique selon au moins l'une des revendications 14 à 17, **caractérisé en ce que** l'au moins un élément de chauffage PTC (10) est agencé au centre du canal de flux d'air.

19. Module chauffant électrique selon la revendication 2 et au moins l'une des revendications 14 à 18, **caractérisé en ce que**, dans le cadre (1), une tôle annulaire inférieure (11) et une tôle annulaire supérieure (12) sont agencées au-dessous et au-dessus des éléments de chauffage PTC (10) pour la mise en contact électrique des éléments de chauffage PTC (10), les tronçons de transfert de chaleur (20) des lamelles conductrices de chaleur (13) reposant sur l'une des deux tôles annulaires (12) et l'élément formant ressort (14) en un matériau souple et élastique reposant sur l'autre tôle annulaire (11).

20. Module chauffant électrique selon la revendication 19, **caractérisé en ce que** les tôles annulaires (11, 12) comportent des languettes de contact (18) qui sont guidées vers l'extérieur à travers des ouvertures dans le cadre (1).

21. Module chauffant électrique selon au moins l'une des revendications 19 ou 20, **caractérisé en ce que** les lamelles conductrices de chaleur (13) sont préfabriquées comme un anneau de lamelles cohérent.
